# EUROPEAN PATENT APPLICATION

(11) **EP 2 721 971 A1**
(43) Date of publication of application: **23.04.2014**
(21) Application number: 13189192.1
(22) Date of filing: 17.10.2013
(51) Int. Cl.: A47J 31/06, A47J 31/44, B65D 85/804

(54) **Product container, as well as assembly of a product container and a tool**

(30) Priority: 17.10.2012 NL 2009656
(71) Applicant: Stas IP B.V., 5633 AD Eindhoven (NL)
(72) Inventor: Stas, Marinus Barbara Arnoldus Maria, 5527 GR Hapert (NL); Cats, Petrus Martinus Maria, 5056 JP Berkel Enschot (NL)
(74) Representative: Verhees, Godefridus Josephus Maria

(57) **Abstract**

A product container 1, which can be filled with a product 2 of which an extract can be made, such as tea or ground coffee, has a body 3 in the form of a cylinder or truncated cone. The body is provided with a side surface 5, and two end faces 11 and 13, of which at least one is provided with a cover sheet 13. The body 3 is made of a water permeable filtering material.

In order to create pressure in the product container 1 during use in a coffee machine, the cover sheet 13 is made of liquid-impervious plastic film or metal foil, or the cover sheet 13 is covered with a liquid-impervious layer of a metal or plastic.

## Description

### Technical filed of the invention

The invention relates to a product container which can be filled with a product of which an extract can be made, such as tea or ground coffee, comprising a body in the form of a cylinder or frustum of a cone with a side surface, and two end surfaces of which at least one is provided with a cover sheet, said body is at least substantially made of a water- permeable filtering material.

The body is preferably made of a tube-shaped filtering material of which the ends are folded up, whereby the folded parts may or may not be sealed to each other. The filtering material is for example a heat sealable material.

### Background of the invention

Such a product container is known from US 2011/0117248 A1. This known product container is deep drawn from one sheet of filtering material. The disadvantage of this known container is that during use in a coffee machine not sufficient fluid pressure is built up in the product container.

### Summary of the invention

It is an object of the present invention to provide a product container of the type defined in the opening paragraph in which the above-described disadvantages does not occur. To this end, the product container according to the invention is characterized in that the cover sheet is made of liquid-impervious metal foil or plastic film, or that the cover sheet is covered with a liquid-impervious layer of a metal or plastic. Because this cover sheet during use in a coffee machine shuts-off the outlet opening in the machine, first pressure is built up by the hot water injected in the product container, until cracks or crevices are formed in the cover sheet. Because of this pressure build-up and because of the narrow openings formed by the cracks, the coffee is pressed through the openings thereby forming a layer of foam on the coffee.

In order to make clearly visible and sensible to which end surface of the body to the cover sheet is present, an embodiment of the product container according to the invention is characterized in that at one of the end surfaces the body comprises a projecting edge or lip or at one of the end faces a sheet of filtering material is secured on this end face which sheet protrudes outside of the side surface of the body wherein the projecting part has the form of an edge or lip, and the cover sheet extends over the edge or lip.

Another embodiment with which this is visible or sensible, is characterized in that the cover sheet extends beyond the side surface of the body to form a protruding edge or lip.

A further embodiment of the product container according to the invention is characterized in that at least one hole or opening is present in the cover sheet. This is particularly beneficial in the case where the cover sheet extends beyond the side surface of the body.

Furthermore, there may be a sheet of filtering material between the cover sheet, and the end surface near the cover sheet and/or on the other end face, in order to achieve better adhesion of the cover sheet with the body.

In order to avoid that, in case the product container is cylindrically shaped, the product container is placed in a wrong way in a coffee machine a further embodiment of the product container according to the invention is characterized in that on each end surface a cover sheet is present. In this case, there has to be a provision that ensures that in the cover sheet, which is located at the end where the water is injected, at least one hole is created in order to allow water entering the product container, or that in both cover sheets there is at least one hole.

A favorable embodiment of the product container according to the invention is characterized in that the filtering material comprises a water- permeable paper product. Another important advantage is that this material holds cholesterolraising fats which are present in the coffee.

A further favorable embodiment of the product container according to the invention is characterized in that the body and/or the cover sheet is at least substantially made of a biodegradable material, so that the used product container together with the content can be considered as biodegradable waste. The biodegradable material is preferably a compostable material.

A further favorable embodiment of the product container according to the invention is characterized in that the cover sheet and/or the body comprise thermoplastic fibers, so that after the filling of the body, the cover can be connected to the body in a per se known manner by heating and pressure.

An embodiment of the product container according to the invention is characterized in that it is filled with a product. A favorable embodiment of the product container, in which it gains in strength and is thus better to handle, is characterized in that the product and/or the body is pre-mixed with a binder.

The invention also relates to an assembly of a product container according to the invention and a re-usable tool. As regards the assembly, the invention is characterized in that the tool is provided with a cylindrical or conical side wall, and whether or not it is provided with a bottom. This allows the product container to be placed in a coffee maker more easy and better. The side wall and/or the bottom are preferably made of metal or plastic.

An embodiment of the assembly is characterized in that the tool is provided with an ejector, so that when removing the product container from the tool one does not get dirty or wet hands and one does not have any direct contact with the hot water in the product container immediately after use.

A further favorable embodiment of the assembly is characterized in that the ejector is formed by at least a portion of a bottom of the tool which portion is pivotally connected to the side wall of the tool or, in the case the tool has no bottom, if formed by an arm pivotably connected to the side wall which arm while in use is present adjacent an end face of the product container. With the help of this part of the bottom or with the aid of the arm, the product container can be pushed easily from the tool after use.

Yet a further advantageous embodiment of the assembly is characterized in that the ejector is provided with at least one sharp projection which while in use presses a hole in a cover sheet of the product container. This is particularly advantageous if the product container is cylindrical and at both end faces is provided with a non- liquid-permeable cover sheet.

### Brief description of the drawings

The invention will be further elucidated below on the basis of drawings. These drawings show an embodiment of the assembly of the product container and the tool according to the present invention. In the drawings:
Figure 1 shows an embodiment of the product container and the tool in cross-section, and
Figure 2 is a bottom view of the tool.

### Detailed description of the drawings

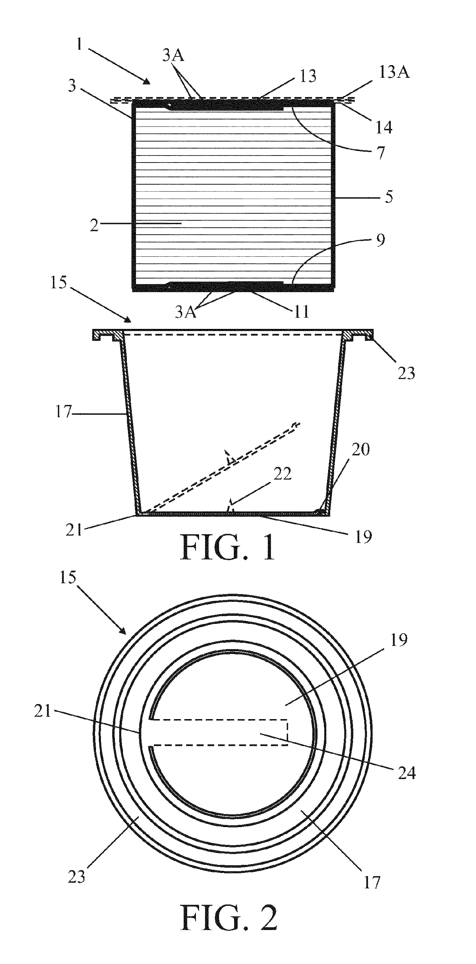

In figure 1 an embodiment of an assembly of a product container 1 and a tool 15 made of metal or plastic is shown. The product container 1 has a body 3 in the form of a cylinder made of a tubular sheet of water-permeable, biodegradable and compostable filtering material, for example a water-permeable paper product. The ends of this cylinder are closed and form the end surfaces 7 and 9 of the body, with parts 3A of the filtering material overlap each other and are attached to each other. On one of the end surfaces 9 a sheet of filter material 11 is applied and on the other end surface 7 a cover sheet 13 from non-liquid-permeable metal foil or plastic film is applied. Also, the cover sheet is made of a biodegradable and compostable material. The product container is filled with a product 2, of which an extract can be made, such as tea or ground coffee.

The tool 15 is provided with a conical side wall 17 which is provided with a protruding edge 23 and a bottom connected via a flexible hinge 21 with the side wall 19, which bottom forms an ejection device for the product container. On the edge of the bottom opposite the hinge 21, the bottom is provided with a projection 20 that prevents the bottom is deflected out of the tool. With broken lines the bottom is displayed in a position turned to the inside, in which the product container is pressed out of the tool.

The product container 1 can be pushed into the tool 15 and the assembly can then be easily positioned into a coffee machine. After the assembly has been removed from the coffee machine, the product container 1 can be removed easily out of the tool 15 by pressing against the hinged bottom 19.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims. For example, instead of applying the cover sheet 13 on the end surface 7, first, a sheet 14 of filtering material can be applied on the end surface 7, which sheet extends beyond the side surface 5 along the whole or one or more portions of the periphery 5, and then the cover sheet 13A is arranged on the sheet 14 of filtering material. In that case, preferably, at least one hole is provided in the cover sheet 13A so that some flow through the cover sheet can be realized during the building-up of pressure in the product container during use. Also, the tool 15 can be provided with an arm 24, instead of the bottom 19, pivoted connected to the side panel 17 and the ejector can be provided with a sharp projection 22.

## Claims

1. Product container (1) which can be filled with a product (2) of which an extract can be made, such as tea or ground coffee, comprising a body (3) in the form of a cylinder or frustum of a cone with a side surface (5), and two end surfaces (7, 9) of which at least one is provided with a cover sheet (13, 13A), said body is at least substantially made of a water- permeable filtering material, **characterized in that** the cover sheet (13) is made of liquid-impervious metal foil or plastic film, or that the cover sheet is covered with a liquid-impervious layer of a metal or plastic.

2. Product container according to claim 1, **characterized in that** at one of the end surfaces (7) the body (3) comprises a projecting edge or lip or at one of the end faces a sheet of filtering material (14) is secured on this end face which sheet protrudes outside of the side surface (5) of the body wherein the projecting part has the form of an edge or lip, and the cover sheet (13A) extends over the edge or lip.

3. Product container according to claim 1, **characterized in that** the cover sheet extends beyond the side surface of the body to form a protruding edge or lip.

4. Product container according to one of the preceding claims, **characterized in that** at least one hole or opening is present in the cover sheet.

5. Product container according to any one of the preceding claims, **characterized in that** between the cover sheet (13A), and the end surface (7) near the cover sheet and/or on the other end face (9) a sheet of filtering material (14, 11) is present.

6. Product container according to any one of the preceding claims, **characterized in that** on each end surface a cover sheet is present.

7. Product container according to any one of the preceding claims, **characterized in that** the filtering material comprises a water- permeable paper product.

8. Product container according to one of the preceding claims, **characterized in that** the body (3) and/or the cover sheet (13, 13A) is at least substantially made of a biodegradable material.

9. Product container according to claim 8, **characterized in that** the cover sheet and/or the body comprise thermoplastic fibers.

10. Product container according to any of the claims, **characterized in that** it is filled with a product (2).

11. Product container according to claim 10, **characterized in that** the product and/or the body is pre-mixed with a binder.

12. An assembly of a product container according to any one of the preceding claims and a re-usable tool, **characterized in that** the tool (15) is provided with a cylindrical or conical side wall (17), and whether or not it is provided with a bottom (19).

13. An assembly according to claim 12, **characterized in that** the tool (15) is provided with an ejector.

14. An assembly according to claim 13, **characterized in that** the ejector is formed by at least a portion of a bottom (19) of the tool (15) which portion is pivotally connected to the side wall (17) of the tool or, in the case the tool has no bottom, if formed by an arm pivotably connected to the side wall (24) which arm while in use is present adjacent an end face of the product container.

15. An assembly according to claim 13 or 14, **characterized in that** the ejector is provided with at least one sharp projection (22) which while in use presses a hole in a cover sheet of the product container.
